# EUROPÄISCHE PATENTSCHRIFT

(11) **EP 0 502 430 B1**
(45) Veröffentlichungstag und Bekanntmachung des Hinweises auf die Patenterteilung: **01.06.1994**
(21) Anmeldenummer: 92103416.1
(22) Anmeldetag: 28.02.1992
(51) Int. Cl.: B60R 22/44

(54) **Gurtaufroller mit Komforteinrichtung**
Seat belt retractor with comfort mechanism
Enrouleur de ceinture de sécurité avec réduction de tension

(30) Priorität: 06.03.1991 DE 9102691 U
(43) Veröffentlichungstag der Anmeldung: 09.09.1992
(73) Patentinhaber: AUTOLIV DEVELOPMENT AB, S-44783 Vargarda (SE)
(72) Erfinder: Reulein, Hermann, Dr., W-4044 Neuss (DE)
(74) Vertreter: Müller, Karl-Ernst, Dr., Dipl.-Ing.

(56) Entgegenhaltungen:
- DE-A- 2 752 758
- DE-A- 3 916 588
- DE-U- 8 710 645

## Beschreibung

Die Neuerung betrifft einen selbstsperrenden Gurtaufroller mit einer auf die Aufwickelvorrichtung für das Gurtband einwirkenden Komforteinrichtung mit einer stärker dimensionierten Rückholfeder und einer schwächer dimensionierten Komfortfeder, die in einem gemeinsamen Federgehäuse über ein in Abhängigkeit vom Aufwickelzustand des Gurtbandes ansteuerbares Kupplungsrad derart miteinander verbunden sind, daß die beiden Federn in einem Betriebszustand eine einstückige Aufwickelfeder ausbilden und daß in einem anderen Betriebszustand nur die Komfortfeder als Aufwickelfeder wirkt, und wobei eine Dämpfungsvorrichtung zur Abmilderung einer schlagartigen Kupplungswirkung vorgesehen ist.

Ein gattungsgemäßer Gurtaufroller ist aus der DE-A- 28 03 874 bekannt; dieser Gurtaufroller weist zunächst eine Rückholfeder auf, die mit einem Ende an dem Federgehäuse und mit ihrem anderen Ende an einem als Klinkenrad ausgebildeten Kupplungsrad eingehängt ist, welches frei drehbar auf der Gurtaufwickelwelle angeordnet ist; eine zweite, gegenüber der Rückholfeder schwächer dimensionierte Komfortfeder ist mit ihrem einen Ende an dem Klinkenrad und mit dem anderen Ende an der Gurtaufwickelwelle befestigt. Zu Beginn der Abwickelbewegung des Gurtbandes von der Gurtaufwickelwelle wirken Rückholfeder und Komfortfeder aufgrund ihrer Kopplung über das frei drehbare Klinkenrad als eine einstückige Feder, während ab einem festgelegten Abwickelzustand über eine entsprechende Steuervorrichtung die weitere Drehung des Klinkenrades verhindert wird, so daß danach nur noch die Komfortfeder auf die Gurtaufwickelwelle einwirkt.

Mit dem bekannten Gurtaufroller ist der Nachteil verbunden, daß beim Aufwickeln des Gurtbandes, bei dem ab dem festgelegten Aufwickelzustand über die Steuervorrichtung und das von ihr beaufschlagte Klinkenrad eine Zuschaltung der Rückholfeder zur Federwirkung der zunächst allein wirksamen Komfortfeder erfolgt, die stärker dimensionierte Rückholfeder die schwächere Komfortfeder schlagartig auf Block wickelt, indem zunächst die Federwindungen der Komfortfeder unter der einsetzenden Wirkung der Rückholfeder enger aneinandergepreßt werden. Bei dem bekannten Gurtaufroller ist bereits eine aufwendige Dämpfungseinrichtung mit zahlreichen Bauteilen zur Vermeidung dieses Aufwickelschlages vorgesehen.

Der Neuerung liegt daher die Aufgabe zugrunde, einen gattungsgemäßen Gurtaufroller derart zu verbessern, daß die Dämpfungsvorrichtung einfacher ausgelegt ist und wirkungsvoller arbeitet.

Die Lösung dieser Aufgabe ergibt sich einschließlich vorteilhafter Ausgestaltungen und Weiterbildungen aus dem Inhalt der Schutzansprüche, welche dieser Beschreibung nachgestellt sind.

Die Neuerung sieht in ihrem Grundgedanken vor, daß der Sicherheitsgurtaufroller als Dämpfungsvorrichtung einen Rotations-Öldämpfer mit einem mit einem unbeweglichen Teil des Sicherheitsgurtaufrollers verbundenen Gehäuse und einer mit der Welle des Kupplungsrades drehfest gekoppelten Dämpferwelle aufweist. Mit dieser neuerungsgemäßen Ausgestaltung ist der Vorteil verbunden, daß ohne weitere Umbauten des Gurtaufrollers in sehr einfacher Weise die Welle des Kupplungsrades hinsichtlich des auftretenden Aufwickelschlages abgebremst beziehungsweise in ihrer Drehbewegung gedämpft werden kann, indem ein handelsüblicher Rotations-Öldämpfer mit der Welle des Kupplungsrades gekoppelt und gegenüber dem Gurtaufroller festgelegt ist.

Nach einem Ausführungsbeispiel der Neuerung kann dabei der Rotations-Öldämpfer außen auf dem die Federn des Gurtaufrollers umgebenden Federgehäuse aufgesetzt sein, wobei die Dämpferwelle des Öldämpfers das Federgehäuse des Gurtaufrollers durchgreifend an die Welle des Kupplungsrades angeschlossen ist.

Ein alternatives Ausführungsbeispiel sieht vor, den Rotations-Öldämpfer innerhalb des die Federn des Gurtaufrollers umgebenden Federgehäuses anzuordnen, so daß keine bauliche Veränderung der Außenkontur des Sicherheitsgurtaufrollers und damit auch eine Vergrößerung seiner Baugröße erforderlich ist. Die Neuerung läßt sich diesbezüglich dabei so verwirklichen, daß das Kupplungsrad einen axial verlaufenden, die Lagerung des Kupplungsrades an dem Federgehäuse mit Abstand umgreifenden Vorsprung zur Halterung der Rückholfeder aufweist, wobei der Rotations-Öldämpfer in dem dadurch gebildeten Ringraum zwischen der Lagerung der Welle des Kupplungsrades und dem Vorsprung angeordnet ist. Da eine axiale Fluchtung der Dämpferwelle und der Welle des Kupplungsrades damit nicht erreichbar ist, ist nach einem Ausführungsbeispiel der Neuerung die Anordnung eines zusätzlichen, radial angeordneten Übertragungsgliedes zur Verbindung der beiden Wellen vorgesehen.

In der Zeichnung sind Ausführungsbeispiele der Neuerung wiedergegeben, welche nachstehend beschrieben sind. Es zeigen:
- Fig. 1: einen Schnitt durch die Federseite eines selbstsperrenden Sicherheitsgurtaufrollers,
- Fig. 2: den Gegenstand der Figur 1 in einem anderen Ausführungsbeispiel.

In einem Gurtaufrollergehäuse 10 ist eine Gurtaufwickelwelle 11 gelagert, auf der im einzelnen nicht dargestelltes Gurtband aufgewickelt ist. Seitlich an dem Gurtaufrollergehäuse 10 angeordnet ist ein Federgehäuse 12, in welches die Welle 11 mit einem Wellenfortsatz 13 hinein reicht.

In dem Federgehäuse 12 ist eine Komfortfeder 14 angeordnet, deren inneres Ende mit dem Wellenfortsatz 13 verbunden ist und deren äußeres Ende an einem radialen und die Feder 14 einhausenden Fortsatz 15 eines Kupplungsrades 19 eingehängt ist. Das Kupplungsrad 19 ist mit seiner Welle 18 in einer an der Innenseite des Federgehäuses 12 vorspringend angeordneten Hülse 20 frei drehbar gelagert und unterteilt gleichzeitig den Innenraum des Federgehäuses 12 in einen dem Gurtaufrollergehäuse 10 zugewandten Teilraum zur Aufnahme der Komfortfeder 14 und in einen äußeren Teilraum, in welchem eine Rückholfeder 21 untergebracht ist. Die Rückholfeder 21 ist mit einem größeren Durchmesser stärker ausgebildet als die Komfortfeder 14, und sie ist mit ihrem inneren Ende an einem axial von dem Kupplungsrad 19 abstehenden und die Lagerhülse 20 mit Abstand umgebenden Vorsprung 23 und mit ihrem äußeren Ende an dem inneren Umfang des Federgehäuses 12 befestigt.

Das Kupplungsrad 19 weist an der Außenseite seines in die Ebene der Komfortfeder 14 ragenden und diese einschließenden Fortsatzes 15 eine Außenverzahnung 25 auf, der als Steuervorrichtung für das Kupplungsrad 19 ein von einem Elektromagneten 26 verschwenkbarer Sperrhebel zugeordnet ist. Der Elektromagnet 26 mit zugeordnetem Sperrhebel ist im Inneren des Federgehäuses 12 angeordnet, wobei der durch den geringeren Durchmesser der Komfortfeder 14 gegenüber der Rückholfeder 21 gegebene Raum genutzt ist, um den Elektromagneten 26 axial neben der Rückholfeder 21 und radial zur Komfortfeder 14 anzuordnen.

Das Federgehäuse 12 ist seinerseits an dem Gurtaufrollergehäuse 10 befestigt und hierzu mit einem Fortsatz 28 auf den Wellenfortsatz 13 aufgeschoben. Dabei ist das Federgehäuse 12 zweiteilig, mit einem Boden 27 und einer Kappe 29 ausgeführt, wobei der als Lagerbuchse wirkende Fortsatz 28 mit dem Boden 27 vorzugsweise einstückig verbunden ist.

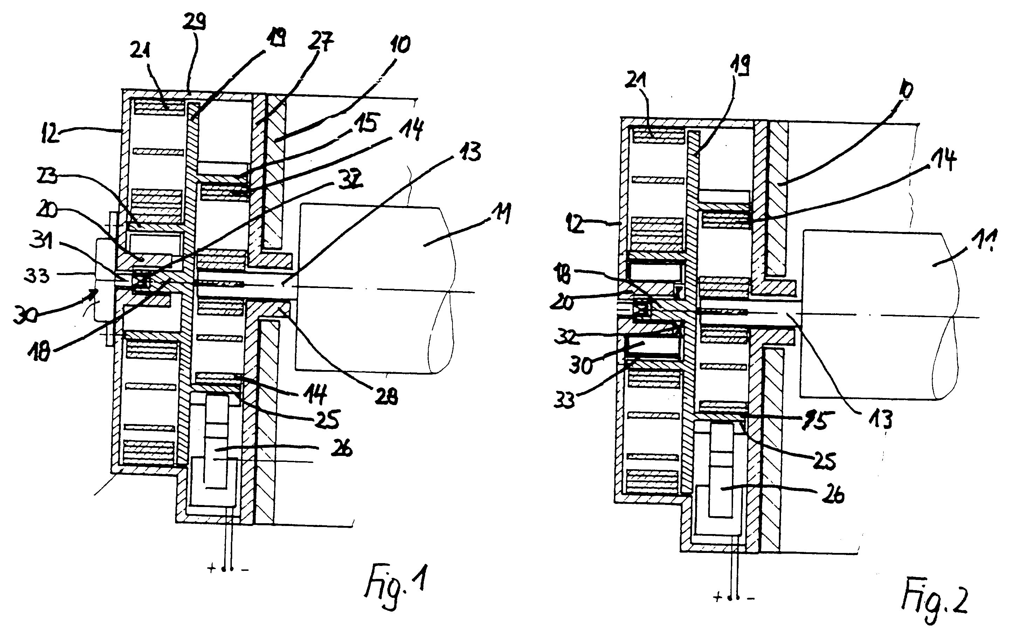

Bei dem aus Figur 1 ersichtlichen Ausführungsbeispiel ist von außen auf das Federgehäuse 12 ein Rotations-Öldämpfer 30 mit einem Gehäuse 33 aufgesetzt, welches gegenüber dem Federgehäuse 12 unbeweglich festgelegt ist. Mit seiner Dämpferwelle 31 durchgreift der Öldämpfer 30 das Federgehäuse 12 im Bereich der Lagerhülse 20 für die Welle 18 des Kupplungsrades 19, und mittels eines Übertragungsgliedes 32 sind die in diesem Fall axial fluchtenden Wellen 18, 31 miteinander gekoppelt.

Bei dem aus Figur 2 ersichtlichen Ausführungsbeispiel ist der Rotations-Öldämpfer 30 in dem zwischen dem axialen Vorsprung 23 des Kupplungsrades 19 zur Halterung der Rückholfeder 21 und der Lagerhülse 20 des Federgehäuses 12 ergebenden Ringraum angeordnet, wobei das Übertragungsglied 32 in radialer Weise die in verschiedenen Ebenen liegenden Dämpferwelle 31 und Welle 18 des Kupplungsrades 19 miteinander zu koppeln hat.

Hinsichtlich der Wirkungsweise des Gurtaufrollers wirken beim Abwickeln des Gurtbandes von der Gurtaufwickelwelle 11 die beiden Federn 21, 24 aufgrund ihrer Kopplung über das zunächst frei drehbare Kupplungsrad 19 wie eine einzige Aufwickelfeder; bei einem festgelegten Abwickelzustand des Gurtbandes wird nach entsprechender Ansteuerung des Elektromagneten 26 das Kupplungsrad 19 durch den vom Elektromagneten beaufschlagten Sperrhebel in seiner weiteren Drehbewegung angehalten, so daß ab diesem Zeitpunkt bei weiterem Auszug des Gurtbandes nur noch die Komfortfeder 14 die Aufwickelfunktion ausübt. Gleichzeitig verbleibt die Rückholfeder 21 in dem so festgelegten Spannungszustand.

Beim Aufwickeln des Gurtbandes zieht zunächst die Komfortfeder 14 über die Drehung der Gurtaufwickelwelle 11 das Gurtband ein, wobei zu dem festgelegten Zeitpunkt der Sperrhebel des Elektromagneten 26 das Kupplungsrad 19 freigibt, so daß nun die Rückholfeder 21 in ihrer Federwirkung zugeschaltet wird und die von der Komfortfeder 14 eingeleitete Aufwickelbewegung bestützt beziehungsweise übernimmt. Im Augenblick des Zuschaltens wirkt dabei der auf die Welle 18 des Kupplungsrades 19 einwirkende Rotations-Öldämpfer 30 derartig dämpfend ein, daß sich ein Aufwickelschlag im Augenblick des Zuschaltens nicht ergibt und die stärkere Federkraft der Rückholfeder 21 erst mit zunehmendem Aufwickelweg verstärkend wirksam wird.

Die in der vorstehenden Beschreibung, den Schutzansprüchen und der Zeichnung offenbarten Merkmale des Gegenstandes dieser Unterlagen können einzeln als auch in beliebigen Kombinationen untereinander für die Verwirklichung der Neuerung in ihren verschiedenen Ausführungsformen wesentlich sein.

## Patentansprüche

1. Selbstsperrender Gurtaufroller mit einer auf die Aufwickelvorrichtung für das Gurtband einwirkenden Komforteinrichtung mit einer stärker dimensionierten Rückholfeder (21) und einer schwächer dimensionierten Komfortfeder (14), die in einem gemeinsamen Federgehäuse (12) über ein in Abhängigkeit vom Aufwickelzustand des Gurtbandes ansteuerbares Kupplungsrad (19) derart miteinander verbunden sind, daß die beiden Federn (14,21) in einem Betriebszustand eine einstückige Aufwickelfeder ausbilden, und daß in einem anderen Betriebszustand nur die Komfortfeder (14) als Aufwickelfeder wirkt, und wobei eine Dämpfungsvorrichtung (30) zur Abmilderung einer schlagartigen Kupplungswirkung vorgesehen ist, dadurch gekennzeichnet, daß der Gurtaufroller als Dämpfungsvorrichtung einen Rotations-Öldämpfer (30) mit einem mit einem unbeweglichen Teil (12) des Sicherheitsgurtaufrollers verbundenen Gehäuse (33) und einer mit der Welle (18) des Kupplungsrades (19) drehfest gekoppelten Dämpferwelle (31) aufweist.

2. Sicherheitsgurtaufroller nach Anspruch 1, dadurch gekennzeichnet, daß der Rotations-Öldämpfer (30) mit seinem Gehäuse (33) außen auf dem die Federn (14, 21) des Gurtaufrollers umgebenden Federgehäuse (12) aufgesetzt ist und die Dämpferwelle (31) das Gehäuse (12) durchgreifend an die Welle (18) des Kupplungsrades (19) angeschlossen ist.

3. Sicherheitsgurtaufroller nach Anspruch 1, dadurch gekennzeichnet, daß der Rotations-Öldämpfer (30) innerhalb des die Federn (14, 21) des Gurtaufrollers umgebenden Federgehäuses (12) angeordnet ist.

4. Sicherheitsgurtaufroller nach Anspruch 3, dadurch gekennzeichnet, daß das Kupplungsrad (19) einen axial verlaufenden, die Lagerung (20) des Kupplungsrades (19) an dem Federgehäuse (12) mit Abstand umgreifenden Vorsprung (23) zur Halterung der Rückholfeder (21) aufweist und der Rotations-Öldämpfer (30) in dem dadurch gebildeten Ringraum angeordnet ist.

5. Sicherheitsgurtaufroller nach Anspruch 4, dadurch gekennzeichnet, daß die Dämpferwelle (31) des Öldämpfers (30) mit der Welle (18) des Kupplungsrades (19) über ein radial angeordnetes Übertragungsglied (32) formschlüssig gekoppelt ist.

## Claims

1. Self-locking safety belt winder having a comfort device acting on the winding-up device for the safety belt, the said comfort device having a larger-sized restoring spring (21) and a smaller-sized comfort spring (14) which are connected together in a common spring housing (12) by way of a coupling wheel (19) which can be controlled in dependence upon the winding-up state of the safety belt, so that, in one operating state, the two springs (14, 21) form a one-piece winding-up spring, and in that, in another operating state, only the comfort spring (14) acts as a winding-up spring, and wherein a damping device (30) is provided for softening a jerking coupling effect, characterised in that the safety belt winder has as a damping device a rotary oil damper (30) having a housing (33) connected to a fixed part (12) of the safety belt winder and having a damping shaft (31) coupled to the shaft (18) of the coupling wheel (19) in a rotationally fixed manner.

2. Safety belt winder according to claim 1, characterised in that the rotary oil damper (30) together with its housing (33) is placed on the outside of the spring housing (12) surrounding the springs (14, 21) of the safety belt winder, and the damping shaft (31) is connected to the shaft (18) of the coupling wheel (19) so that the said damping shaft passes through the housing (12).

3. Safety belt winder according to claim 1, characterised in that the rotary oil damper (30) is arranged inside the spring housing (12) surrounding the springs (14, 21) of the safety belt winder.

4. Safety belt winder according to claim 3, characterised in that the coupling wheel (19) has a projection (23) as the mounting for the restoring spring (21), which projection (23) extends axially and surrounds the bearing arrangement (20) of the coupling wheel (19) at a distance on the spring housing (12), and the rotary oil damper (30) is arranged in the annual space formed thereby.

5. Safety belt winder according to claim 4, characterised in that the damping shaft (31) of the oil damper (30) is coupled in a form-locked manner to the shaft (18) of the coupling wheel (19) by way of a transmission element (32) which is arranged radially.

## Revendications

1. Enrouleur de ceinture autobloquant, avec un dispositif de confort, agissant sur le dispositif d'enroulement de la ceinture et équipé d'un ressort de rappel (21) de caractéristique plus forte et d'un ressort de confort (14) de caractéristique plus faible, reliés ensemble dans un boîtier à ressorts (12) commun, par l'intermédiaire d'une roue de couplage (19) pouvant être commandée en fonction de l'état d'enroulement de la ceinture, de manière que les deux ressorts (14,21) constituent, en un premier état de fonctionnement, un ressort d'enroulement monobloc, et de manière que, dans un deuxième état de fonctionnement, seul le ressort de confort (14) agit comme ressort d'enroulement, et où un dispositif d'amortissement (30) est prévu pour adoucir un effet de couplage brutal, caractérisé en ce que l'enrouleur de ceinture, présente, à titre de dispositif d'amortissement, un amortisseur de rotation à huile (30), avec un boîtier (33) relié à une partie (12) fixe de l'enrouleur de ceinture de sécurité, et avec un arbre amortisseur (31) couplé de façon assujettie en rotation à l'arbre (18) de la roue de couplage (19).

2. Enrouleur de ceinture de sécurité selon la revendication 1, caractérisé en ce que l'amortisseur de rotation à huile (30) est monté avec son boîtier (33) extérieurement sur le boîtier à ressorts (12) entourant les ressorts (14, 21) de l'enrouleur de ceinture, et l'arbre d'amortisseur (31) est raccordé, en le traversant, à l'arbre (18) de la roue de couplage (19).

3. Enrouleur de ceinture de sécurité selon la revendication 1, caractérisé en ce que l'amortisseur de rotation à huile (30) est disposé à l'intérieur du boîtier à ressorts (12) entourant les ressorts (14,21) de l'enrouleur de ceinture.

4. Enrouleur de ceinture de sécurité selon la revendication 3, caractérisé en ce que la roue de couplage (19) présente une saillie (23), s'étendant axialement et entourant à distance le palier de rotation (20) de la roue de couplage (19) sur le boîtier à ressorts (12), en vue de fixer le ressort de rappel (21), et l'amortisseur de rotation à huile (30) est disposé dans l'espace annulaire ainsi constitué.

5. Enrouleur de ceinture de sécurité selon la revendication 4, caractérisé en ce que l'arbre d'amortisseur (31), de l'amortisseur à huile (30), est couplé à l'arbre (18) de la roue de couplage (19), avec ajustement de forme, par l'intermédiaire d'un organe de transmission (32) disposé radialement.
